(19) Europäisches Patentamt
European Patent Office
Office européen des brevets

(11) **EP 4 358 184 A1**

(12) **EUROPEAN PATENT APPLICATION**
published in accordance with Art. 153(4) EPC

(43) Date of publication:
**24.04.2024 Bulletin 2024/17**

(51) International Patent Classification (IPC):
**H01M 4/485** (2010.01)    **C01F 17/36** (2020.01)
**C01G 23/00** (2006.01)    **H01M 4/36** (2006.01)
**H01M 4/62** (2006.01)

(21) Application number: **22824554.4**

(22) Date of filing: **10.03.2022**

(52) Cooperative Patent Classification (CPC):
**C01F 17/36; C01G 23/00; H01M 4/36; H01M 4/485; H01M 4/62;** Y02E 60/10

(86) International application number:
**PCT/JP2022/010446**

(87) International publication number:
**WO 2022/264554 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 JP 2021101769**

(71) Applicant: **Panasonic Intellectual Property Management Co., Ltd.**
**Kadoma-shi, Osaka 571-0057 (JP)**

(72) Inventors:
• **OMAE, Takanori**
**Kadoma-shi, Osaka 571-0057 (JP)**

• **WADA, Tomokatsu**
**Kadoma-shi, Osaka 571-0057 (JP)**
• **KUSUMOTO, Shohei**
**Kadoma-shi, Osaka 571-0057 (JP)**
• **TSUJITA, Takuji**
**Kadoma-shi, Osaka 571-0057 (JP)**
• **SAGARA, Akihiko**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **COMPOSITE ACTIVE MATERIAL, ELECTRODE MATERIAL, BATTERY, AND METHOD FOR MANUFACTURING COMPOSITE ACTIVE MATERIAL**

(57) The composite active material according to one aspect of the present disclosure includes an active material including Li, Ti, and O and a first solid electrolyte. The active material is a porous material having a plurality of pores. The first solid electrolyte includes Li, M, and X. M is at least one selected from the group consisting of metal elements and metalloid elements belonging to the 5th or 6th period. X is at least one selected from the group consisting of F, Cl, Br, and I. At least a part of the first solid electrolyte is present inside the plurality of pores.

**FIG. 1**

**Description**

Technical Field

The present disclosure relates to a composite active material, an electrode material, a battery, and a method for manufacturing a composite active material.

Background Art

PTL 1 discloses a battery that includes a negative electrode active material layer containing a lithium titanium oxide as a negative electrode active material, wherein the volume of pores in the negative electrode active material layer is adjusted.

Citation List

Patent Literature

PTL 1: Japanese Unexamined Patent Application Publication (Translation of PCT Application) No. 2018-504767

Summary of Invention

Technical Problem

In existing technology, the output characteristics are desired to be further improved.

Solution to Problem

A composite active material according to one aspect of the present disclosure includes:

an active material including Li, Ti, and O; and
a first solid electrolyte, wherein
the active material is a porous material having a plurality of pores,
the first solid electrolyte includes Li, M, and X,
M is at least one selected from the group consisting of metal elements and metalloid elements belonging to the 5th or 6th period,
X is at least one selected from the group consisting of F, Cl, Br, and I, and
at least a part of the first solid electrolyte is present inside the plurality of pores. Advantageous Effects of Invention

According to the present disclosure, the output characteristics of the battery can be improved.

Brief Description of Drawings

[Fig. 1] Fig. 1 is a diagram showing a schematic structure of a composite active material according to Embodiment 1.
[Fig. 2] Fig. 2 is a flow chart showing a method for manufacturing the composite active material according to Embodiment 1.
[Fig. 3] Fig. 3 is a diagram showing a schematic structure of an electrode material according to Embodiment 2.
[Fig. 4] Fig. 4 is a cross-sectional view showing a schematic structure of a battery according to Embodiment 3.
[Fig. 5] Fig. 5 is a schematic view of compression molding dies used for evaluating the ion conductivities of solid electrolytes.

Description of Embodiments

(Underlying Knowledge Forming Basis of the Present Disclosure)

PTL 1 discloses a lithium secondary battery that includes a negative electrode active material layer containing a lithium titanium oxide as a negative electrode active material, wherein the volume of pores in the negative electrode active material layer is adjusted to be from 10 vol% to 50 vol%. Thus, hitherto, in a lithium secondary battery using an electrolyte solution, a porous lithium titanium oxide is used in order to improve the output characteristics. However, when a solid electrolyte is used as an electrolyte, an interface is unlikely to be formed between the active material and the solid electrolyte, and the interface resistance increases. Accordingly, even if a porous lithium titanium oxide is used as a negative electrode active material, the output characteristics of the battery cannot be sufficiently improved.

The present inventors have intensively studied on technology for improving the output characteristics of a battery and as a result have arrived at the technology of the present disclosure.

(Overview of one aspect of the present disclosure)

The composite active material according to a 1st aspect of the present disclosure includes:

an active material including Li, Ti, and O; and
a first solid electrolyte, wherein
the active material is a porous material having a plurality of pores,
the first solid electrolyte includes Li, M, and X,
M is at least one selected from the group consisting of metal elements and metalloid elements belonging to the 5th or 6th period,
X is at least one selected from the group consisting of F, Cl, Br, and I, and
at least a part of the first solid electrolyte is present inside the plurality of pores.

According to the configuration above, since the interface formed between the porous active material and the first solid electrolyte increases, the interface resistance decreases. Consequently, the output characteristics of the battery can be improved.

In a 2nd aspect of the present disclosure, for example, in the composite active material according to the 1st aspect, the first solid electrolyte may be represented by the following Formula (1):

$$Li_\alpha M_\beta X_\gamma \qquad \text{Formula (1)}.$$

Here, $\alpha$, $\beta$, and $\gamma$ are each independently a value greater than 0. According to the configuration above, the output characteristics of the battery can be more improved.

In a 3rd aspect of the present disclosure, for example, in the composite active material according to the 1st or 2nd aspect, in the first solid electrolyte, M may include yttrium. According to the configuration above, the ion conductivity of the first solid electrolyte can be further improved.

In a 4th aspect of the present disclosure, for example, in the composite active material according to any one of the 1st to 3rd aspects, the first solid electrolyte may include at least one selected from the group consisting of $Li_3YBr_3Cl_3$ and $Li_3YBr_2Cl_4$. According to the configuration above, the output characteristics of the battery can be more improved.

In a 5th aspect of the present disclosure, for example, in the composite active material according to any one of the 1st to 4th aspects, the BET specific surface area of the active material defined as $S_{AM}$ and the BET specific surface area of the composite active material defined as $S_{AM-SE}$ may satisfy the following Expression (2):

$$S_{AM-SE}/S_{AM} < 1 \quad \text{Expression (2)}.$$

According to the configuration above, the first solid electrolyte is easily present inside the pores of the active material. Consequently, the output characteristics of the battery can be more improved.

In a 6th aspect of the present disclosure, for example, the composite active material according to the 5th aspect may satisfy the following Expression (3):

$$S_{AM-SE}/S_{AM} < 0.5 \quad \text{Expression (3)}.$$

According to the configuration above, the first solid electrolyte is more easily present inside the pores of the active material. Consequently, the output characteristics of the battery can be more improved.

In a 7th aspect of the present disclosure, for example, in the composite active material according to any one of the 1st to 6th aspects, the active material may include a lithium titanium oxide. According to the configuration above, the safety of the battery can be improved while improving the charge and discharge efficiency of the battery.

In an 8th aspect of the present disclosure, for example, in the composite active material according to the 7th aspect, the lithium titanium oxide may include $Li_4Ti_5O_{12}$. According to the configuration above, the safety of the battery can be improved while improving the charge and discharge efficiency of the battery.

In a 9th aspect of the present disclosure, for example, in the composite active material according to any one of the 1st to 8th aspects, the active material may have an average particle diameter of greater than or equal to 5 $\mu$m. According to the configuration above, the output characteristics of the battery can be more improved.

In a 10th aspect of the present disclosure, for example, in the composite active material according to any one of the 1st to 9th aspects, the first solid electrolyte may be free from sulfur. According to the configuration above, the safety of the battery can be improved.

An electrode material according to an 11th aspect of the present disclosure includes:

the composite active material according to any one of the 1st to 10th aspects; and
a second solid electrolyte.

According to the configuration above, the output characteristics of the battery can be improved.

A battery according to a 12th aspect of the present disclosure includes:

a positive electrode; a negative electrode, and an electrolyte layer disposed between the positive electrode and the negative electrode, wherein
at least one selected from the group consisting of the positive electrode and the negative electrode includes the electrode material according to the 11th aspect.

According to the configuration above, the output characteristics of the battery can be improved.

A method for manufacturing a composite active material according to a 13th aspect of the present disclosure includes:

impregnating an active material with a mixture liquid that includes at least one selected from the group consisting of a first solid electrolyte and a raw material thereof and a solvent; and
removing the solvent included in the mixture liquid from the active material, wherein
the active material is a porous material including Li, Ti, and O and having a plurality of pores,
the first solid electrolyte and the raw material include Li, M, and X,
M is at least one selected from the group consisting of metal elements and metalloid elements belonging to the 5th or 6th period, and
X is at least one selected from the group consisting of F, Cl, Br, and I.

According to the configuration above, it is possible to introduce the first solid electrolyte to the inside of the pores of the porous active material. Consequently, since the interface formed between the active material and the first solid electrolyte increases, the interface resistance decreases. Accordingly, the output characteristics of the battery can be improved by using the composite active material obtained by the above manufacturing method.

In a 14th aspect of the present disclosure, for example, the method for manufacturing the composite active material according to the 13th aspect may further include heating of the active material. According to the configuration above, the first solid electrolyte can be precipitated.

In a 15th aspect of the present disclosure, for example, in the method for manufacturing a composite active material according to the 13th or 14th aspect, the solvent may include a nitrile solvent. According to the configuration above, the first solid electrolyte and a raw material thereof can be appropriately dissolved and dispersed.

Embodiments of the present disclosure will now be described with reference to the drawings.

(Embodiment 1)

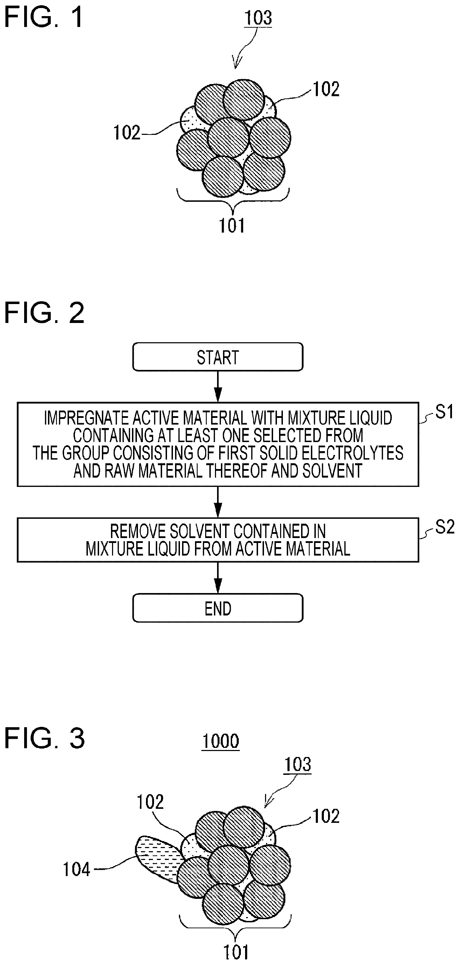

Fig. 1 is a diagram showing a schematic structure of a composite active material according to Embodiment 1.

The composite active material 103 according to Embodiment 1 includes an active material 101 and a first solid electrolyte 102. The active material 101 includes Li, Ti, and O. The active material 101 is a porous material having a plurality of pores. The first solid electrolyte 102 includes Li, M, and X. M is at least one selected from the group consisting of metal elements and metalloid elements belonging to the 5th or 6th period. X is at least one selected from the group consisting of F, Cl, Br, and I. At least a part of the first solid electrolyte 102 is present inside the plurality of pores of the active material 101.

Since the interface that is formed between the active material 101 and the first solid electrolyte 102 increases when the first solid electrolyte 102 is present inside the pores of the active material 101, the interface resistance is reduced. Accordingly, the output characteristics of the battery can be improved by using the composite active material 103.

In the composite active material 103, the first solid electrolyte 102 may be present in the form of particles or in the form of layers. The particles of the first solid electrolyte 102 are present inside the pores. The pores may be filled with the particles of the first solid electrolyte 102. A plurality of particles of the first solid electrolyte 102 can be present in the composite active material 103. A layer of the first solid electrolyte 102 may cover the inner faces of the pores.

The fact that "at least a part of the first solid electrolyte 102 is present inside a plurality of pores of the active material 101" means that there is a particle of the first solid electrolyte 102 present inside a pore of the active material 101. "At least a part" may be, for example, greater than or equal to 1%, greater than or equal to 5%, greater than or equal to 10%, greater than or equal to 20%, greater than or equal to 30%, or greater than or equal to 50% of the total mass of the first solid electrolyte 102 included in the composite active material 103. The upper limit of "at least a part" is not particularly limited. "At least a part" may be, for example, less than or equal to 95%, less than or equal to 90%, less than or equal to 80%, less than or equal to 50%, less than or equal to 30%, or less than or equal to 20% of the total mass of the first solid electrolyte 102 included in the composite active material 103. The "being present inside a pore" means, for example, that a part or the whole of the first solid electrolyte 102 intrudes into the pores of the active material 101.

In the example shown in Fig. 1, the active material 101 is a secondary particle formed by aggregation of a plurality of primary particles. The secondary particle has a porous structure by the formation of a pore between adjacent primary particles. When the active material 101 is a secondary particle, since the interface that is formed between the active material 101 and the first solid electrolyte 102 increases by the presence of the first solid electrolyte 102 inside the pores, the interface resistance is reduced.

The BET specific surface area of the active material 101 is defined as $S_{AM}$, and the BET specific surface area of the composite active material 103 is defined as $S_{AM-SE}$. Then, the composite active material 103 may satisfy the following Expression (2):

$$S_{AM-SE}/S_{AM} < 1 \quad \text{Expression (2).}$$

According to the configuration above, the particles of the first solid electrolyte 102 are easily present inside the pores of the active material 101. Consequently, the output characteristics of the battery can be more improved.

The BET specific surface area $S_{AM}$ of the active material 101 and the BET specific surface area $S_{AM-SE}$ of the composite active material 103 can be determined by, for example, a BET method using a specific surface area measuring apparatus using a nitrogen adsorption method. Specifically, a molecule of which the adsorption occupied area is known is allowed to adsorb to the surface of a particle of each material at the temperature of liquid nitrogen. The specific surface area of the particle of each material can be determined from the absorbed amount.

The active material 101 included in the composite active material 103 can be extracted by, for example, the following method. Only the first solid electrolyte 102 included in the composite active material 103 is dissolved using a solvent. Consequently, it is possible to remove the first solid electrolyte 102 from the composite active material 103 and to extract only the active material 101.

When the composite active material 103 is included in an electrode layer or an electrolyte layer, the composite active material 103 can be extracted by, for example, the following method. The electrode layer or electrolyte layer including the composite active material 103 is dispersed in a solvent in which the first solid electrolyte 102 is not dissolved. The obtained dispersion medium is subjected to centrifugation, and thereby only the composite active material 103 can be extracted due to the difference in the density of the particles.

The composite active material 103 may satisfy the following Expression (3):

$$S_{AM-SE}/S_{AM} < 0.5 \quad \text{Expression (3).}$$

According to the configuration above, the first solid electrolyte 102 is easily present inside the pores of the active material 101. Consequently, the output characteristics of the battery can be more improved. The lower limit of the value of the ratio $S_{AM-SE}/S_{AM}$ is not particularly limited and is, for example, 0.1.

The active material 101 may include a lithium titanium oxide. A battery using a lithium titanium oxide is known to show a high charge and discharge efficiency. The lithium titanium oxide is unlikely to cause precipitation of a lithium metal. Accordingly, the use of a lithium titanium oxide in a negative electrode can prevent internal short-circuit which is caused by that the precipitated metal penetrates through the electrolyte layer and comes into contact with the positive electrode. Furthermore, a lithium titanium oxide has a characteristic that the expansion and contraction associates with insertion and extraction of lithium ions are small. Accordingly, according to the configuration above, the safety of the battery can be improved while improving the charge and discharge efficiency of the battery.

The active material 101 may include a lithium titanium oxide as a main component. In the present disclosure, the "main component" means a component that is included at a mass proportion of greater than or equal to 50%.

The active material 101 may include the lithium titanium oxide at a mass proportion of greater than or equal to 70% with respect to the total of the active material 101.

The active material 101 may be the lithium titanium oxide.

Examples of the lithium titanium oxide include $Li_4Ti_5O_{12}$, $Li_7Ti_5O_{12}$, and $LiTi_2O_4$. When the active material 101 includes a lithium titanium oxide, the lithium titanium oxide may include at least one selected from these materials.

The lithium titanium oxide may include $Li_4Ti_5O_{12}$. According to the configuration above, the safety of the battery can be improved while improving the charge and discharge efficiency of the battery.

The lithium titanium oxide may be $Li_4Ti_5O_{12}$.

The first solid electrolyte 102 includes Li, M, and X. Here, M is at least one selected from the group consisting of metal elements and metalloid elements belonging to the 5th or 6th period. X is at least one selected from the group consisting of F, Cl, Br, and I. According to the configuration above, the ion conductivity of the first solid electrolyte 102 can be improved. Consequently, the output characteristics of the battery can be improved.

In the present disclosure, the "metalloid elements" are B, Si, Ge, As, Sb, and Te. The "metal elements" are all elements included in Groups 1 to 12 of the Periodic Table excluding hydrogen and all elements included in Groups 13 to 16 of the Periodic Table excluding B, Si, Ge, As, Sb, Te, C, N, P, O, S, and Se. That is, the "metalloid elements" or the "metal elements" are a group of elements that can become cations when they form inorganic compounds with halogen elements.

The first solid electrolyte 102 may consist essentially of Li, M, and X. The fact of "consisting essentially of Li, M, and X" means that in the first solid electrolyte 102, the molar proportion (i.e., molar fraction) of the total amount of Li, M, and X to the total amount of all elements constituting the first solid electrolyte 102 is greater than or equal to 90%. As an example, the molar proportion may be greater than or equal to 95%.

The first solid electrolyte 102 may consist of Li, M, and X only. The fact of "consisting of Li, M, and X only" means that in the first solid electrolyte 102, the molar proportion of the total amount of Li, M, and X to the total amount of all elements constituting the first solid electrolyte 102 is 100%.

The first solid electrolyte 102 may be represented by the following Formula (1):

$$Li_\alpha M_\beta X_\gamma \qquad \text{Formula (1).}$$

In Formula (1), $\alpha$, $\beta$, and $\gamma$ are each independently a value greater than 0. According to the configuration above, the ion conductivity of the first solid electrolyte 102 can be more improved. Consequently, the output characteristics of the battery can be more improved.

When the first solid electrolyte 102 includes Li, M, and X, M is a metal element belonging to the 5th or 6th period and may include at least one selected from the group consisting of Group 1 elements, Group 2 elements, Group 3 elements, Group 4 elements, and lanthanoid elements. According to the configuration above, the ion conductivity of the first solid electrolyte 102 can be more improved.

Examples of the Group 1 element included in M include Rb and Cs. Examples of the Group 2 element included in M include Sr and Ba. Examples of the Group 3 element included in M include Y. Examples of the Group 4 element included in M include Zr and Hf. Examples of the lanthanoid element include La, Ce, Pr, Nd, Sm, Eu, Gd, Tb, Dy, Ho, Er, Tm, Yb, and Lu.

When the first solid electrolyte 102 includes Li, M, and X, M is a metal element belonging to the 5th period or the 6th period and may include at least one selected from the group consisting of the Group 5 elements, the Group 13 elements, and the Group 14 elements. According to the configuration above, the ion conductivity of the first solid electrolyte 102 can be more improved.

Examples of the Group 5 element included in M include Nb and Ta. Examples of the Group 13 element included in M include In. Examples of the Group 14 element included in M include Sn.

When the first solid electrolyte 102 includes Li, M, and X, M may include at least one selected from the group consisting of Sr, Ba, Y, Hf, La, Ce, Pr, Nd, Sm, Eu, Gd, Tb, Dy, Ho, Er, Tm, Yb, and Lu. According to the configuration above, the ion conductivity of the first solid electrolyte 102 can be further improved.

When the first solid electrolyte 102 includes Li, M, and X, M may include at least one selected from the group consisting of Sr, Y, Sm, Gd, Dy, and Hf. According to the configuration above, the ion conductivity of the first solid electrolyte 102 can be further improved.

When the first solid electrolyte 102 includes Li, M, and X, X may include at least one selected from the group consisting of Br, Cl, and I. According to the configuration above, the ion conductivity of the first solid electrolyte 102 can be further improved.

When the first solid electrolyte 102 includes Li, M, and X, X may include Br, Cl, and I. According to the configuration above, the ion conductivity of the first solid electrolyte 102 can be further improved.

When the first solid electrolyte 102 includes Li, M, and X, M may include Y (= yttrium). That is, the first solid electrolyte 102 may include Y as a metal element. According to the configuration above, the ion conductivity of the first solid electrolyte 102 can be further improved.

When the first solid electrolyte 102 includes Li, M, and X, M may be Y (= yttrium).

When the first solid electrolyte 102 includes Y, the first solid electrolyte 102 may be represented by the following Formula (2):

$$Li_3YX_6 \qquad \text{Formula (2).}$$

In Formula (2), X is at least one selected from the group consisting of F, Cl, Br, and I.

When the first solid electrolyte 102 includes Y, the first solid electrolyte 102 may be represented by the following Formula (3):

$$Li_3YBr_xCl_{6-x} \qquad \text{Formula (3).}$$

In Formula (3), $0 \le x \le 6$ is satisfied.

When the first solid electrolyte 102 includes Y, the first solid electrolyte 102 may be represented by the following Formula (4):

$$Li_sYBr_xCl_yI_{6-x-y} \qquad \text{Formula (4).}$$

In Formula (4), $0 \le x \le 6$ and $0 \le y \le 6$ are satisfied.

More specifically, the first solid electrolyte 102 may be at least one selected from the group consisting of $Li_3YBr_2Cl_4$ and $Li_3YBr_3Cl_3$. According to the configuration above, the output characteristics of the battery can be more improved.

The first solid electrolyte 102 may include $Li_3YBr_3Cl_3$. According to the configuration above, the ion conductivity of the first solid electrolyte 102 can be more improved. Consequently, the output characteristics of the battery can be more improved.

The first solid electrolyte 102 may include $Li_3YBr_3Cl_3$ at a mass proportion of greater than or equal to 70% with respect to the total of the first solid electrolyte 102.

The first solid electrolyte 102 may be $Li_3YBr_3Cl_3$.

The first solid electrolyte 102 may be free from sulfur. According to the configuration above, generation of hydrogen sulfide gas can be suppressed. Consequently, the safety of the battery can be improved.

The shape of the active material 101 is not limited. The shape of the active material 101 may be, for example, acicular, spherical, or oval spherical. The shape of the active material 101 may be, for example, particulate. The active material 101 may be formed as a secondary particle by aggregation of a plurality of primary particles.

The active material 101 may have an average particle diameter of greater than or equal to 5 $\mu$m. According to the configuration above, the particles of the first solid electrolyte 102 are easily present inside the pores of the active material 101. Consequently, the output characteristics of the battery can be more improved.

The upper limit of the average particle diameter of the active material 101 is not particularly limited. The active material 101 may have an average particle diameter of, for example, less than or equal to 30 $\mu$m.

The shape of the first solid electrolyte 102 is not limited. The shape of the first solid electrolyte 102 may be, for example, acicular, spherical, oval spherical, or fibrous. The shape of the first solid electrolyte 102 may be, for example, particulate. The first solid electrolyte 102 may be formed to have a pellet-like or plate-like shape.

The first solid electrolyte 102 may have an average particle diameter of greater than or equal to 0.1 $\mu$m and less than or equal to 1 $\mu$m. According to the configuration above, the particles of the first solid electrolyte 102 are easily present inside the pores of the active material 101.

The average particle diameter of the active material 101 and the average particle diameter of the first solid electrolyte 102 can be determined as median diameters. In the present disclosure, the "median diameter" means the particle diameter at which the accumulated volume in a volume-based particle size distribution is equal to 50%. The volume-based particle size distribution is measured with, for example, a laser diffraction measurement apparatus or an image analysis apparatus. The first solid electrolyte 102 can be extracted from the composite active material 103 by, for example, the following method. The composite active material 103 is dispersed in a solvent in which the first solid electrolyte 102 is not dissolved. The obtained dispersion medium is subjected to centrifugation, and thereby only the first solid electrolyte 102 can be extracted due to the difference in the density of the particles.

The average particle diameter of the active material 101 may be larger than that of the first solid electrolyte 102. According to the configuration above, the particles of the first solid electrolyte 102 are easily present inside the pores of the active material 101.

In the composite active material 103, the proportion of the mass of the first solid electrolyte 102 to the mass of the active material 101 may be greater than or equal to 5% and less than or equal to 20%. That is, the proportion of the total mass of the particles of the first solid electrolyte 102 to the mass of the active material 101 may be greater than or equal to 5% and less than or equal to 20%. According to the configuration above, the effect of improving the ion conductivity by the first solid electrolyte 102 can be sufficiently obtained. Consequently, the output characteristics of the battery can be more improved.

In the composite active material 103, the proportion of the mass of the first solid electrolyte 102 to the mass of the active material 101 may be greater than or equal to 5% and less than or equal to 15%. That is, the proportion of the total mass of the particles of the first solid electrolyte 102 to the mass of the active material 101 may be greater than or equal to 5% and less than or equal to 15%.

The active material 101 may be coated by a coating material. For example, when the active material 101 is a secondary particle, each of the primary particle of the active material 101 may be coated by a coating material.

As the coating material, a material having low electron conductivity can be used. As the coating material, an oxide material, an oxide solid electrolyte, or the like can be used.

As the oxide material, for example, $SiO_z$, $Al_2O_3$, $TiO_z$, $B_2O_3$, $Nb_2O_5$, $WO_3$, and $ZrO_z$ can be used.

Examples of the oxide solid electrolytes that can be used as the coating material include Li-Nb-O compounds such as $LiNbO_3$; Li-B-O compounds such as $LiBO_2$ and $Li_3BO_3$; Li-Al-O compounds such as $LiAlO_z$; Li-Si-O compounds such as $Li_4SiO_4$; $Li_2SO_4$; Li-Ti-O compounds such as $Li_4Ti_5O_{12}$; Li-Zr-O compounds such as $Li_2ZrO_3$; Li-Mo-O compounds such as $Li_2MoO_3$; Li-V-O compounds such as $LiV_2O_5$; and Li-W-O compounds such as $Li_2WO_4$.

The coating material may be an oxide solid electrolyte.

Oxide solid electrolytes have high ion conductivity and excellent high-potential stability. Accordingly, the charge and discharge efficiency of the battery can be more improved by using an oxide solid electrolyte as the coating material.

The coating material may uniformly coat the active material 101. For example, when the active material 101 is a secondary particle, the coating material may uniformly coat each of the primary particles of the active material 101. In this case, since the direct contact between the active material 101 and another solid electrolyte is suppressed, the side reaction of another solid electrolyte can be suppressed. Accordingly, the charge and discharge efficiency of the battery can be improved. Another solid electrolyte is, for example, a second solid electrolyte 104 that will be described in Embodiment 2.

The coating material may coat partially the active material 101. For example, when the active material 101 is a secondary particle, the coating material may coat partially each of the primary particles of the active material 101. A plurality of individual primary particles of the active material 101 come into direct contact with each other through the part that does not have the coating material, which improves the electron conductivity between the primary particles of the active material 101. Accordingly, the battery can operate at high output.

<Method for manufacturing composite active material>

Subsequently, a method for manufacturing the above-described composite active material 103 will be described. The composite active material 103 can be manufactured by, for example, the following method. Fig. 2 is a flow chart showing a method for manufacturing the composite active material 103 according to Embodiment 1.

As the active material 101, a porous material including Li, Ti, and O and having a plurality of pores is provided. The active material 101 is, for example, porous $Li_4Ti_5O_{12}$. The active material 101 may be a secondary particle.

At least one selected from the group consisting of the first solid electrolyte 102 and a raw material thereof is provided.

The first solid electrolyte 102 includes Li, M, and X. M is at least one selected from the group consisting of metal elements and metalloid elements belonging to the 5th or 6th period. X is at least one selected from the group consisting of F, Cl, Br, and I. Examples of the first solid electrolyte 102 include $Li_3YBr_2Cl_4$ and $Li_3YBr_3Cl_3$.

The raw material of the first solid electrolyte 102 is a raw material powder including Li, M, and X. The raw material powder including Li, M, and X may include, for example, a raw material powder including Li and X and a raw material powder including M and X. Examples of the raw material powder including Li and X include LiF, LiCl, LiBr, LiI, and $Li_3MX_6$. Examples of the raw material powder including M and X include $MF_3$, $MCl_3$, $MBr_3$, $MI_3$, and $Li_3MX_6$.

A mixture liquid including at least one selected from the group consisting of the first solid electrolyte 102 and a raw material thereof and a solvent is produced. In the mixture liquid, weighing is performed such that the rate of the mass of the first solid electrolyte 102 or the raw material of the first solid electrolyte 102 to the mass of the active material 101 is greater than or equal to 5% and less than or equal to 20%. When both the first solid electrolyte 102 and a raw material thereof are used, weighing is performed such that the rate of the total mass of the first solid electrolyte 102 and the raw material thereof to the mass of the active material 101 is greater than or equal to 5% and less than or equal to 20%.

For example, when the first solid electrolyte 102 is used, the first solid electrolyte 102 is stirred together with a solvent to obtain a mixture liquid. On this occasion, the first solid electrolyte 102 is partially or wholly dissolved in the mixture liquid. When the first solid electrolyte 102 is partially dissolved in the mixture liquid, the residue of the first solid electrolyte 102 is dispersed in the mixture liquid. For example, when a raw material of the first solid electrolyte 102 is used, powders of the raw material are weighed at a stoichiometric ratio and are mixed, and the obtained powder mixture is stirred together with a solvent to obtain a mixture liquid. On this occasion, the powder mixture is partially or wholly dissolved in the mixture liquid. When the powder mixture is partially dissolved in the mixture liquid, the residue of the powder mixture is dispersed in the mixture liquid. An active material 101 is impregnated with the thus-obtained mixture liquid (Step S 1).

The solvent may include a nitrile solvent. Examples of the nitrile solvent include acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile. The nitrile solvent may be an acetonitrile solvent. The first solid electrolyte 102 and a raw material thereof can be appropriately dissolved or dispersed by using a nitrile solvent.

The first solid electrolyte 102 or a raw material thereof may be added to a solvent at a weight rate of greater than or equal to 1% and 20% or greater than or equal to 5% and less than or equal to 15% with respect to the weight of the solvent.

Subsequently, the solvent included in the mixture liquid is removed from the active material 101 (Step S2). For example, the active material 101 is stirred at a temperature of greater than or equal to 80°C and less than or equal to 120°C to remove the solvent. Consequently, a composite active material 103 including at least a part of the first solid electrolyte 102 inside a plurality of pores is obtained. The active material 101 is isolated by filtration or centrifugation, and the active material 101 may be then heated to remove the solvent from the active material 101.

When a raw material of the first solid electrolyte 102 is used, the solvent is removed, and the obtained active material 101 may be then heated. Alternatively, the active material 101 may be heated such that the first solid electrolyte 102 is generated in the pores of the active material 101 by reacting raw materials with each other, while removing the solvent from the active material 101 by heating. The heating treatment may be performed in an inert gas atmosphere or in vacuum at a temperature of greater than or equal to 200°C and less than or equal to 500°C. The first solid electrolyte 102 can be precipitated by the heating treatment.

(Embodiment 2)

Embodiment 2 will now be described. The description overlapping that in Embodiment 1 is omitted as appropriate.

Fig. 3 is a cross-sectional view showing a schematic structure of an electrode material 1000 according to Embodiment 2.

The electrode material 1000 includes the composite active material 103 according to Embodiment 1 and a second solid electrolyte 104.

In the composite active material 103, at least a part of the first solid electrolyte 102 is present inside a plurality of pores of the active material 101. Accordingly, the interface formed between the active material 101 and the first solid electrolyte 102 increases to decrease the interface resistance. Accordingly, according to the configuration above, the output characteristics of the battery can be improved.

As the second solid electrolyte 104, the materials exemplified as the first solid electrolyte 102 in Embodiment 1 can be used. That is, the electrode material 1000 may include a solid electrolyte having a composition that is the same as that of the first solid electrolyte 102 as the second solid electrolyte 104. According to the configuration above, the ion conductivity of the second solid electrolyte 104 can be further improved. Consequently, the output characteristics of the battery can be more improved.

The second solid electrolyte 104 may include a solid electrolyte having a composition that is different from that of the first solid electrolyte 102.

The second solid electrolyte 104 may include two or more solid electrolytes selected from the materials mentioned as the first solid electrolyte 102.

The second solid electrolyte 104 may include one solid electrolyte only selected from the materials mentioned as the first solid electrolyte 102.

The second solid electrolyte 104 may include $Li_3YBr_2Cl_4$. According to the configuration above, the ion conductivity of the second solid electrolyte 104 can be more improved. Consequently, the output characteristics of the battery can be more improved.

The second solid electrolyte 104 may include $Li_3YBr_2Cl_4$ at a mass proportion of greater than or equal to 70% with respect to the total of the second solid electrolyte 104.

The second solid electrolyte 104 may be $Li_3YBr_2Cl_4$.

The shape of the second solid electrolyte 104 is not limited. The shape of the second solid electrolyte 104 may be, for example, acicular, spherical, oval spherical, or fibrous. The shape of the second solid electrolyte 104 may be, for example, particulate. The second solid electrolyte 104 may be formed to have a pellet-like or plate-like shape.

When the shape of the second solid electrolyte 104 is particulate (e.g., spherical), the second solid electrolyte 104 may have a median diameter of greater than or equal to 0.1 $\mu$m and less than or equal to 100 $\mu$m. According to the configuration above, the composite active material 103 and the second solid electrolyte 104 can form a good dispersion state in the electrode. Consequently, the charge and discharge characteristics of the battery are improved.

The second solid electrolyte 104 may have a median diameter of greater than or equal to 0.5 $\mu$m and less than or equal to 10 $\mu$m. According to the configuration above, the composite active material 103 and the second solid electrolyte 104 can form a better dispersion state in the electrode.

The shape of the composite active material 103 is not limited. The shape of the composite active material 103 may be, for example, acicular, spherical, or oval spherical. The shape of the composite active material 103 may be, for example, particulate. The composite active material 103 can have the same shape as that of the active material 101. The composite active material 103 can have the same median diameter as that of the active material 101.

In the electrode material 1000, the composite active material 103 and the second solid electrolyte 104 may be in contact with each other.

The electrode material 1000 may include particles of a plurality of composite active materials 103 and particles of a plurality of second solid electrolytes 104.

In the electrode material 1000, the content of the composite active material 103 and the content of the second solid electrolyte 104 may be the same as or different from each other.

<Method for manufacturing electrode material>

The electrode material 1000 can be manufactured by, for example, the following method.

The electrode material 1000 is obtained by mixing the composite active material 103 and the second solid electrolyte 104. The method for mixing the composite active material 103 and the second solid electrolyte 104 is not particularly limited. For example, the composite active material 103 and the second solid electrolyte 104 may be mixed using a tool such as a mortar, or the composite active material 103 and the second solid electrolyte 104 may be mixed using a mixer such as a ball mill. The mixing ratio of the composite active material 103 and the second solid electrolyte 104 is not particularly limited.

The second solid electrolyte 104 is manufactured by, for example, the following method.

Raw material powders are provided so as to give the compounding ratio of a target composition. The raw material powders may be, for example, halides. For example, when $Li_3YBr_2Cl_4$ is produced as the second solid electrolyte 104, LiBr, LiCl, and $YCl_3$ are provided at a molar ratio of 2.0 : 1.0 : 1.0. The raw material powders may be mixed at a molar ratio adjusted in advance such that a composition change which may occur during the synthesis process is offset.

The types of the raw material powders are not limited to the above. For example, a combination of LiCl and $YBr_3$ and a composite anion compound such as $LiBr_{0.5}Cl_{0.5}$ may be used. A mixture of a raw material powder containing oxygen (e.g., an oxide, a hydroxide, a sulfate, or a nitrate) and a halide (e.g., ammonium halide) may be used.

The raw material powders are thoroughly mixed using a mortar and a pestle, a ball mill, or a mixer to obtain a powder mixture. Subsequently, the powder mixture is pulverized by a mechanochemical milling method. Thus, the raw material powders react to give a second solid electrolyte 104. Alternatively, the second solid electrolyte 104 may be obtained by thoroughly mixing the raw material powders and then heat-treating the powder mixture in an inert gas atmosphere or in vacuum.

The heat-treatment may be performed within a range of, for example, greater than or equal to 100°C and less than or equal to 650°C for greater than or equal to 1 hour. Consequently, the above-described second solid electrolyte 104 including a crystal phase is obtained.

The structure of the crystal phase (crystal structure) in the second solid electrolyte 104 can be determined by selecting the elements (e.g., M and X) constituting the second solid electrolyte 104, the ratio of the elements constituting the second solid electrolyte 104, and the method and conditions of the reaction between the raw material powders.

(Embodiment 3)

Embodiment 3 will now be described. The description overlapping that in Embodiment 1 or 2 is omitted as appropriate.

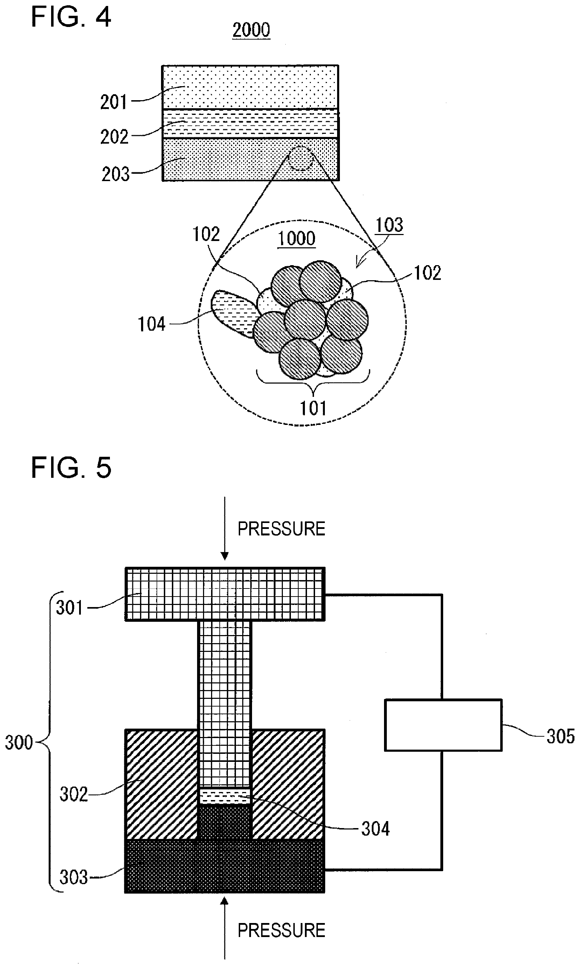

Fig. 4 is a cross-sectional view showing a schematic structure of a battery 2000 according to Embodiment 3.

The battery 2000 according to Embodiment 3 includes a positive electrode 201, an electrolyte layer 202, and a negative electrode 203. The electrolyte layer 202 is disposed between the positive electrode 201 and the negative electrode 203. At least one selected from the group consisting of the positive electrode 201 and the negative electrode 203 includes the electrode material 1000 according to Embodiment 2. Fig. 4 illustrates a case in which the negative electrode 203 includes the electrode material 1000.

According to the configuration above, the output characteristics of the battery 2000 can be improved.

Both the positive electrode 201 and the negative electrode 203 may include the electrode material 1000. Any one of the positive electrode 201 and the negative electrode 203 may include the electrode material 1000.

The negative electrode 203 may include the electrode material 1000. That is, the negative electrode 203 may include a composite active material 103 as a negative electrode active material and a second solid electrolyte 104 as a solid electrolyte.

When the positive electrode 201 includes the electrode material 1000, the volume ratio "v1 : (100 - v1)" of the active material 101 and the first solid electrolyte 102 and second solid electrolyte 104 included in the positive electrode 201 may satisfy $30 \leq v1 \leq 95$. Here, v1 represents the volume ratio of the active material 101 when the total volume of the active material 101, the first solid electrolyte 102, and the second solid electrolyte 104 included in the positive electrode 201 is defined as 100. When $30 \leq v1$ is satisfied, a sufficient energy density of the battery 2000 can be secured. When $v1 \leq 95$ is satisfied, the battery 2000 can operate at high output.

When the negative electrode 203 includes the electrode material 1000, the volume ratio "v2 : (100 - v2)" of the active material 101 and the first solid electrolyte 102 and second solid electrolyte 104 included in the negative electrode 203 may satisfy $30 \leq v2 \leq 95$. Here, v2 represents the volume ratio of the active material 101 when the total volume of the active material 101, the first solid electrolyte 102, and the second solid electrolyte 104 included in the negative electrode 203 is defined as 100. When $30 \leq v2$ is satisfied, a sufficient energy density of the battery 2000 can be secured. When $v2 \leq 95$ is satisfied, the battery 2000 can operate at high output.

The positive electrode 201 may have a thickness of greater than or equal to 10 $\mu$m and less than or equal to 500 $\mu$m. When the thickness of the positive electrode 201 is greater than or equal to 10 $\mu$m, a sufficient energy density of the battery 2000 can be secured. When the thickness of the positive electrode 201 is less than or equal to 500 $\mu$m, the battery 2000 can operate at high output.

The negative electrode 203 may have a thickness of greater than or equal to 10 $\mu$m and less than or equal to 500 $\mu$m. When the thickness of the negative electrode 203 is greater than or equal to 10 $\mu$m, a sufficient energy density of the battery 2000 can be secured. When the thickness of the negative electrode 203 is less than or equal to 500 $\mu$m, the battery 2000 can operate at high output.

The electrolyte layer 202 is a layer containing an electrolyte. The electrolyte is, for example, a solid electrolyte. That is, the electrolyte layer 202 may be a solid electrolyte layer.

The solid electrolyte contained in the electrolyte layer 202 is referred to as a third solid electrolyte. As the third solid electrolyte, a halide solid electrolyte, a sulfide solid electrolyte, an oxide solid electrolyte, a polymeric solid electrolyte, or a composite hydride solid electrolyte may be used.

As the halide solid electrolyte, for example, the materials exemplified as the first solid electrolyte 102 of Embodiment 1 may be used. That is, the electrolyte layer 202 may include a solid electrolyte that has the same composition as that of the first solid electrolyte 102. According to the configuration above, the ion conductivity of the third solid electrolyte can be further improved. Consequently, the output characteristics of the battery can be more improved.

The third solid electrolyte may include a solid electrolyte having a composition that is different from that of the first solid electrolyte 102.

The third solid electrolyte may include two or more solid electrolytes selected from the materials mentioned as the first solid electrolyte 102.

The third solid electrolyte may include one solid electrolyte only selected from the materials mentioned as the first solid electrolyte 102.

The third solid electrolyte may include $Li_3YBr_2Cl_4$. According to the configuration above, the ion conductivity of the third solid electrolyte can be more improved. Consequently, the output characteristics of the battery can be more improved.

The third solid electrolyte may include $Li_3YBr_2Cl_4$ as a main component.

The third solid electrolyte may include $Li_3YBr_2Cl_4$ at a mass proportion of greater than or equal to 70% with respect to the total of the third solid electrolyte.

The third solid electrolyte may be $Li_3YBr_2Cl_4$.

As the sulfide solid electrolyte, $Li_2S\text{-}P_2S_5$, $Li_2S\text{-}SiS_2$, $Li_2S\text{-}B_2S_3$, $Li_2S\text{-}GeS_2$, $Li_{3.25}Ge_{0.25}P_{0.75}S_4$, $Li_{10}GeP_2S_{12}$, and the like can be used. $LiX$, $Li_2O$, $MO_q$, $Li_pMO_q$, or the like may be added to these electrolytes. Here, X includes at least one selected from the group consisting of F, Cl, Br, and I; M includes at least one selected from the group consisting of P, Si, Ge, B, Al, Ga, In, Fe, and Zn; and p and q are each a natural number. One or more sulfide solid electrolytes selected from the materials above can be used.

The oxide solid electrolytes that can be used are, for example, NASICON-type solid electrolytes represented by $LiTi_2(PO_4)_3$ and element substitutes thereof; $(LaLi)TiO_3$-based perovskite-type solid electrolytes; LISICON-type solid electrolytes represented by $Li_{14}ZnGe_4O_{16}$, $Li_4SiO_4$, $LiGeO_4$, and element substitutes thereof; garnet-type solid electrolytes represented by $Li_7La_3Zr_2O_{12}$ and element substitutes thereof; $Li_3N$ and H-substitutes thereof; $Li_3PO_4$ and N-substitutes thereof; and glass or glass ceramics formed by adding $Li_2SO_4$, $Li_2CO_3$, or the like to an Li-B-O compound as a base material, such as $LiBOz$ or $Li_3BO_3$.

As the polymeric solid electrolyte, for example, a compound of a polymeric compound and a lithium salt can be used. The polymeric compound may have an ethylene oxide structure. A polymeric compound having an ethylene oxide structure can contain a large amount of a lithium salt. Accordingly, it is possible to more enhance the ion conductivity. As the lithium salt, $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, or the like can be used. One or more lithium salts selected from the above-mentioned lithium salts can be used.

As the composite hydride solid electrolyte, for example, $LiBH_4$-$LiI$ or $LiBH_4$-$P_2S_5$ can be used.

The electrolyte layer 202 may contain the third solid electrolyte as a main component.

The electrolyte layer 202 may contain the third solid electrolyte at a mass proportion of greater than or equal to 70% with respect to the total of the electrolyte layer 202.

The electrolyte layer 202 may contain the third solid electrolyte only.

The electrolyte layer 202 may contain two or more of the materials mentioned as the third solid electrolyte.

The shape of the third solid electrolyte is not limited. The shape of the third solid electrolyte may be, for example, acicular, spherical, oval spherical, or fibrous. The shape of the third solid electrolyte may be, for example, particulate. The third solid electrolyte may be formed to have a pellet-like or plate-like shape.

When the third solid electrolyte is particulate (e.g., spherical), the third solid electrolyte may have a median diameter of greater than or equal to 0.1 $\mu$m and less than or equal to 100 $\mu$m. According to the configuration above, the ion conductivity of the third solid electrolyte can be improved. In addition, the third solid electrolyte and another material can form a good dispersion state in the electrolyte layer 202. Consequently, the charge and discharge characteristics of the battery 2000 are improved.

The third solid electrolyte may have a median diameter of greater than or equal to 0.5 $\mu$m and less than or equal to 10 $\mu$m. According to the configuration above, the ion conductivity of the third solid electrolyte can be further improved.

The electrolyte layer 202 may have a thickness of greater than or equal to 1 $\mu$m and less than or equal to 300 $\mu$m. When the thickness of the electrolyte layer 202 is greater than or equal to 1 $\mu$m, a short circuit between the positive electrode 201 and the negative electrode 203 is unlikely to occur. When the thickness of the electrolyte layer 202 is less than or equal to 300 $\mu$m, the battery 2000 can operate at high output.

The positive electrode 201 may further include an active material other than the composite active material 103. The positive electrode 201 may include a positive electrode active material. The positive electrode 201 may include a positive electrode active material only as the active material. The positive electrode active material includes, for example, a material that has a property of occluding and releasing metal ions such as lithium ions.

Examples of the positive electrode active material are a lithium-containing transition metal oxide, a transition metal fluoride, a polyanionic material, a fluorinated polyanionic material, a transition metal sulfide, a transition metal oxysulfide, and a transition metal oxynitride. Examples of the lithium-containing transition metal oxide are $Li(Ni,Co,Al)O_2$, $Li(Ni,Co,Mn)O_2$, and $LiCoO_2$. In particular, when a lithium-containing transition metal oxide is used as the positive electrode active material, the manufacturing cost can be reduced, and the average discharge voltage can be increased. In order to increase the energy density of the battery 2000, the positive electrode active material may include lithium nickel cobalt manganese oxide. The positive electrode active material may be, for example, $Li(Ni,Co,Mn)O_2$.

In the present disclosure, the notation "(A,B,C)" in a chemical formula means "at least one selected from the group consisting of A, B, and C". For example, "(Ni,Co,Al)" is synonymous with "at least one selected from the group consisting of Ni, Co, and Al".

The positive electrode 201 may further include a solid electrolyte. According to the configuration above, the ion conductivity in the positive electrode 201 can be improved. Consequently, the output characteristics of the battery 2000 can be improved.

As the solid electrolyte included in the positive electrode 201, a halide solid electrolyte, a sulfide solid electrolyte, an oxide solid electrolyte, a polymeric solid electrolyte, or a composite hydride solid electrolyte may be used.

As the halide solid electrolyte, the sulfide solid electrolyte, the oxide solid electrolyte, the polymeric solid electrolyte, or the composite hydride solid electrolyte, the materials exemplified as the third solid electrolyte included in the electrolyte layer 202 can be used.

The negative electrode 203 may further include an active material other than the composite active material 103. The negative electrode 203 may include a negative electrode active material. The negative electrode 203 may include a negative electrode active material only as the active material. The negative electrode active material includes, for example, a material that has a property of occluding and releasing metal ions such as lithium ions.

Examples of the negative electrode active material are a metal material, a carbon material, an oxide, a nitride, a tin compound, and a silicon compound. The metal material may be a single metal. The metal material may be an alloy. Examples of the metal material include a lithium metal and a lithium alloy. Examples of the carbon material include natural graphite, coke, graphitizing carbon, carbon fibers, spherical carbon, artificial graphite, and amorphous carbon. The capacity density of the battery 2000 can be improved by using silicon (Si), tin (Sn), a silicon compound, a tin compound, or the like.

The negative electrode 203 may further include a solid electrolyte. According to the configuration above, the ion conductivity in the negative electrode 203 can be improved. Consequently, the output characteristics of the battery 2000 can be improved.

As the solid electrolyte included in the negative electrode 203, a halide solid electrolyte, a sulfide solid electrolyte, an oxide solid electrolyte, a polymeric solid electrolyte, or a composite hydride solid electrolyte may be used.

As the halide solid electrolyte, the sulfide solid electrolyte, the oxide solid electrolyte, the polymeric solid electrolyte, or the composite hydride solid electrolyte, the materials exemplified as the third solid electrolyte contained in the electrolyte layer 202 can be used.

The shapes of the solid electrolytes included in the positive electrode 201 and the negative electrode 203 are not limited. The shape of the solid electrolyte may be, for example, acicular, spherical, oval spherical, or fibrous. The shape of the solid electrolyte may be, for example, particulate. The solid electrolyte may be formed to have a pellet-like or plate-like shape.

When the shapes of the solid electrolytes included in the positive electrode 201 and the negative electrode 203 are particulate (e.g., spherical), the solid electrolytes may have a median diameter of greater than or equal to 0.1 $\mu$m and less than or equal to 100 $\mu$m. According to the configuration above, the positive electrode active material and the solid electrolyte can form a good dispersion state in the positive electrode 201. In addition, the negative electrode active material and the solid electrolyte can form a good dispersion state in the negative electrode 203. Consequently, the charge and discharge characteristics of the battery 2000 are improved.

The solid electrolytes included in the positive electrode 201 and the negative electrode 203 may have a median diameter of greater than or equal to 0.5 $\mu$m and less than or equal to 10 $\mu$m. According to the configuration above, the positive electrode active material and the solid electrolyte can form a better dispersion state in the positive electrode 201. In addition, the negative electrode active material and the solid electrolyte can form a better dispersion state in the negative electrode 203.

The shapes of the positive electrode active material and the negative electrode active material are not limited. The shapes of the positive electrode active material and the negative electrode active material may be, for example, acicular, spherical, or oval spherical. The shapes of the positive electrode active material and the negative electrode active material may be, for example, particulate.

When the shapes of the positive electrode active material and the negative electrode active material are particulate (e.g., spherical), the positive electrode active material and the negative electrode active material may have a median diameter of greater than or equal to 0.1 $\mu$m and less than or equal to 100 $\mu$m. When the positive electrode active material and the negative electrode active material each have a median diameter of greater than or equal to 0.1 $\mu$m, the positive electrode active material and the solid electrolyte can form a good dispersion state in the positive electrode 201, and the negative electrode active material and the solid electrolyte can form a better dispersion state in the negative electrode 203. Consequently, the charge and discharge characteristics of the battery 2000 are improved. When the positive electrode active material and the negative electrode active material each have a median diameter of less than or equal to 100 $\mu$m, the diffusion speeds of lithium in the positive electrode 201 and the negative electrode 203 are increased. Consequently, the battery can operate at high output.

The median diameters of the positive electrode active material and the negative electrode active material may be larger than that of the solid electrolyte. According to the configuration above, the positive electrode active material and the solid electrolyte can form a good dispersion state in the positive electrode 201. In addition, the negative electrode active material and the solid electrolyte can form a better dispersion state in the negative electrode 203.

The volume ratio "v3 : (10 0- v3)" of the positive electrode active material and the solid electrolyte included in the positive electrode 201 may satisfy $30 \leq v3 \leq 95$. Here, v3 represents the volume ratio of the positive electrode active material when the total volume of the positive electrode active material and the solid electrolyte included in the positive electrode 201 is defined as 100. When $30 \leq v3$ is satisfied, a sufficient energy density of the battery 2000 can be secured. When $v3 \leq 95$ is satisfied, the battery 2000 can operate at high output.

The volume ratio "v4 : (100 - v4)" of the negative electrode active material and the solid electrolyte included in the negative electrode 203 may satisfy $30 \leq v4 \leq 95$. Here, v4 represents the volume ratio of the negative electrode active material when the total volume of the negative electrode active material and the solid electrolyte included in the negative electrode 203 is defined as 100. When $30 \leq v4$ is satisfied, a sufficient energy density of the battery 2000 can be secured. When $v4 \leq 95$ is satisfied, the battery 2000 can operate at high output.

At least one selected from the group consisting of the positive electrode 201, the electrolyte layer 202, and the negative electrode 203 may include a binder for the purpose of improving the adhesion between individual particles. The binder is used for improving the binding property of the material constituting the electrode. Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene-butadiene rubber, and carboxymethylcellulose. As the binder, a copolymer of two or more materials selected from the group consisting of tetrafluoroethylene, hexafluoroethylene, hexafluoropropylene, perfluoroalkyl vinyl ether, fluorinated vinylidene, chlorotrifluoroethylene, ethylene, propylene, pentafluoropropylene, fluoromethyl vinyl ether, acrylic acid, and hexadiene can also be used. A mixture of two or more selected from the materials above may be used as the binder.

At least one of the positive electrode 201 and the negative electrode 203 may include a conductive assistant for the purpose of enhancing the electron conductivity. As the conductive assistant, for example, graphite such as natural graphite and artificial graphite, carbon black such as acetylene black and Ketjen black, conductive fibers such as carbon fibers and metal fibers, metal powders such as fluorinated carbon and aluminum, conductive whiskers such as zinc oxide and potassium titanate, conductive metal oxides such as titanium oxide, and conductive polymeric compounds such as polyaniline, polypyrrole, and polythiophene can be used. When a carbon conductive assistant is used as the conductive assistant, the cost can be reduced.

Examples of the shape of the battery 2000 include a coin type, a cylindrical type, a square type, a sheet type, a button type, a flat type, and a stacked type.

<Method for manufacturing battery>

The battery 2000 can be manufactured by, for example, the following method. Hereinafter, a method for manufacturing a battery 2000 will be described using the case in which the negative electrode 203 includes the electrode material 1000 of Embodiment 2 as an example.

The material for forming a positive electrode 201, the material for forming an electrolyte layer 202, and the electrode material 1000 as the material for forming a negative electrode 203 are each provided. A stack in which the positive electrode 201, the electrolyte layer 202, and the negative electrode 203 are disposed in this order is produced by a known method. Consequently, a battery 2000 is obtained.

The solid electrolyte included in the positive electrode 201 and the third solid electrolyte included in the electrolyte layer 202 can be manufactured by the same method as the method for manufacturing the second solid electrolyte 104 described in the method for manufacturing the electrode material 1000 according to Embodiment 2.

EXAMPLES

The details of the present disclosure will now be described using Examples and Comparative Examples. The following Examples are examples, and the present disclosure is not limited to the following Examples.

«Example 1»

[Production of composite active material]

$Li_4Ti_5O_{12}$ was used as the active material. $Li_4Ti_5O_{12}$ was a secondary particle formed by aggregation of a primary particle and was a porous material having a plurality of pores. As the raw materials of the first solid electrolyte, raw material powders LiBr and $YCl_3$ were weighed at a molar ratio of 3 : 1 and were mixed. The obtained powder mixture was stirred together with an acetonitrile solvent to obtain a mixture liquid. Subsequently, the active material was impregnated with the obtained mixture liquid. On this occasion, weighing was performed such that the ratio of the mass of the first solid electrolyte to the mass of the active material was 90 : 10. The active material impregnated with the mixture liquid was stirred at a temperature of 80°C to remove the solvent. After the removal of the solvent, the obtained active material was subjected to heating treatment. The heating treatment was performed in an argon atmosphere at 400°C for 1 hour. Consequently, the composite active material of Example 1 was obtained.

It was confirmed with an X-ray diffractometer that a first solid electrolyte was generated inside the pores of the composite active material. It was also confirmed by observation of a cross-section of the composite active material with a scanning electron microscope (SEM) that the first solid electrolyte was generated inside the pores of the composite active material.

[Production of second solid electrolyte]

Raw material powders LiBr, $YCl_3$, LiCl, and $YCl_3$ were weighed at a molar ratio of Li : Y : Br : Cl = 3 : 1 : 2 : 4 in an argon atmosphere of a dew point of less than or equal to -60°C (hereinafter0, referred to as "dry argon atmosphere"). The raw material powders were pulverized and mixed in a mortar to obtain a mixture. Subsequently, the mixture was subjected to milling treatment with a planetary ball mill (manufactured Fritsch GmbH, model P-7) at 600 rpm for 25 hours. Consequently, a powder of $Li_3YBr_2Cl_4$ was obtained as a second solid electrolyte of Example 1.

[Production of electrode material]

A vapor grown carbon fiber (manufactured by Resonac Corporation, VGCF-H) was used as a conductive assistant. The composite active material and second solid electrolyte of Example 1 and the conductive assistant were weighed at a mass ratio of 66.7 : 28.3 : 5 in a dry argon atmosphere. These materials were mixed in a mortar. Consequently, an electrode material of Example 1 was obtained. "VGCF" is a registered trademark of Resonac Corporation.

[Production of battery]

The obtained electrode material was used as the material for forming a negative electrode; $Li_3YBr_2Cl_4$ that was the same as the second solid electrolyte of Example 1 was used as the material (third solid electrolyte) for forming an electrolyte layer; and 20.8 mg of the electrode material and 80 mg of $Li_3YBr_2Cl_4$ were weighed. The electrode material and $Li_3YBr_2Cl_4$ were stacked in this order in an electrically insulating outer cylinder and were compression molded at 360 MPa. Consequently, a stack composed of a negative electrode and an electrolyte layer was produced. Subsequently, on the electrolyte layer of the stack, metal In with a thickness of 200 $\mu$m, metal Li with a thickness of 300 $\mu$m, and metal In with a thickness of 200 $\mu$m were disposed in this order. This was compression molded at a pressure of 80 MPa to produce a three-layer stack composed the negative electrode, the electrolyte layer, and an In-Li-In layer. Subsequently, current collectors made of stainless steel were disposed on both surfaces of the three-layer stack, and a current collector lead was attached to each of the current collectors. Finally, the electrically insulating outer cylinder was isolated and sealed from the outside atmosphere with an electrically insulating ferrule to produce a battery of Example 1.

<<Comparative Example 1>>

In the production of the electrode material, $Li_4Ti_5O_{12}$ was used instead of the composite active material as the active material. $Li_4Ti_5O_{12}$ was a secondary particle formed by aggregation of a primary particle and was a porous material having a plurality of pores. That is, in the electrode material of Comparative Example 1, no first solid electrolyte was present inside the pores of the active material. $Li_4Ti_5O_{12}$, the second solid electrolyte, and the conductive assistant of Example 1 were weighed at a mass ratio of 60 : 35 : 5 in a dry argon atmosphere. An electrode material and battery of Comparative Example 1 were produced by the same method as in Example 1 except for the above.

(Evaluation of BET specific surface area)

Regarding the composite active material of Example 1, the BET specific surface area $S_{AM}$ of the active material and the BET specific surface area $S_{AM-SE}$ of the composite active material were determined by a BET method using a specific surface area measuring apparatus (manufactured by MicrotracBEL Corporation, BELSORP MINI X) using a nitrogen adsorption method. Specifically, 500 mg of each sample was weighed and sealed in a measurement cell and was vacuum-dried at 150°C for 4 hours, and the measurement was then carried out while cooling with liquid nitrogen.

(Evaluation of ion conductivity)

Fig. 5 is a schematic view of compression molding dies used for evaluating the ion conductivities of solid electrolytes.
The compression molding dies 300 included a punch upper part 301, a die 302, and a punch lower part 303. The punch upper part 301 and the punch lower part 303 were both formed from electron-conductive stainless steel. The die 302 was made of insulating polycarbonate.
The ion conductivity of $Li_3YBr_2Cl_4$ as the second solid electrolyte and third solid electrolyte of Example 1 was evaluated using the compression molding dies 300 by the following method.
The powder of $Li_3YBr_2Cl_4$ (i.e., the solid electrolyte powder 304 in Fig. 5) was loaded inside the compression molding dies 300 in a dry argon atmosphere having a dew point of less than or equal to -30°C. A pressure of 300 MPa was applied to $Li_3YBr_2Cl_4$ inside the compression molding dies 300 using the punch upper part 301 and the punch lower part 303.
The punch upper part 301 and the punch lower part 303 were connected to a potentiostat (PrincetonApplied Research, Inc., VersaSTAT4) 305 equipped with a frequency response analyzer, while applying the pressure. The punch upper part 301 was connected to the working electrode and the potential measurement terminal. The punch lower part 303 was connected to the counter electrode and the reference electrode. The impedance of $Li_3YBr_2Cl_4$ was measured by an electrochemical impedance measurement method at room temperature.
The ion conductivity of $Li_3YBr_2Cl_4$ as the second solid electrolyte and third solid electrolyte of Example 1 measured at 22°C was $1.5 \times 10^{-3}$ S/cm.

(Evaluation of composition of solid electrolyte)

The composition of $Li_3YBr_2Cl_4$ as the second solid electrolyte and third solid electrolyte of Example 1 was evaluated by ICP (Inductively coupled Plasma) emission spectral analysis. The difference from the charging composition of LiIY was within 3%. It can be said from this result that the charging composition by a planetary ball mill and the composition of the obtained solid electrolyte were almost the same.

(Charge and discharge test)

A charge and discharge test was then performed using the batteries of Example 1 and Comparative Example 1 under the following conditions.

The batteries were each disposed in a thermostat of 25°C. The battery was charged at a constant current of a current value of 100 μA. The charging was terminated when the potential with respect to Li reached 0.38 V. Subsequently, constant current discharge at a current value of 100 μA was performed, and the discharging was terminated when the potential with respect to Li reached 1.9 V. The charging capacity when charged at 100 μA and the discharging capacity when discharged at 100 μA were obtained based on the charge and discharge results above. The results are shown in Table 1.

[Table 1]

|  | $S_{AM-SE}/S_{AM}$ | Charging capacity at 100 μA charging (mAh/g) | Discharging capacity at 100 μA discharging (mAh/g) |
|---|---|---|---|
| Example 1 | 0.23 | 161 | 160 |
| Comparative Example 1 | - | 148 | 147 |

<<Consideration>>

As shown in Table 1, the charge and discharge capacity of the battery of Examples 1 in which the first solid electrolyte was present inside the pores of the active material in the electrode material was increased compared to that in the battery of Comparative Example 1 in which no first solid electrolyte was present inside the pores of the active material in the electrode material.

This is explained as follows. When the first solid electrolyte is present inside a plurality of pores of the active material, the interface between the active material and the first solid electrolyte increases, and the interface resistance decreases. Accordingly, in Example 1, since at least a part of the first solid electrolyte is present inside a plurality of pores of the active material, and the charge and discharge capacity of the battery is increased.

It is thought that in a battery of Example 1 satisfying a ratio of the BET specific surface area $S_{AM-SE}$ of the composite active material to the BET specific surface area $S_{AM}$ of the active material, $S_{AM-SE}/S_{AM}$, of less than 0.5, the first solid electrolyte is particularly more easily present inside the pores of the active material.

Industrial Applicability

The battery of the present disclosure can be used, for example, as an all-solid-state lithium secondary battery.

Reference Signs List

1000 electrode material
101 active material
102 first solid electrolyte
103 composite active material
104 second solid electrolyte
2000 battery
201 positive electrode
202 electrolyte layer
203 negative electrode

300 compression molding dies
301 punch upper part
302 die
303 punch lower part
304 powder of solid electrolyte
305 potentiostat

**Claims**

1. A composite active material comprising:

   an active material including Li, Ti, and O; and
   a first solid electrolyte, wherein
   the active material is a porous material having a plurality of pores,
   the first solid electrolyte includes Li, M, and X,
   M is at least one selected from the group consisting of metal elements and metalloid elements belonging to the 5th or 6th period,
   X is at least one selected from the group consisting of F, Cl, Br, and I, and
   at least a part of the first solid electrolyte is present inside the plurality of pores.

2. The composite active material according to claim 1, wherein

   the first solid electrolyte is represented by a following Formula (1):

   $$Li_\alpha M_\beta X_\gamma \qquad \text{Formula (1)}$$

   here, $\alpha$, $\beta$, and $\gamma$ are each independently a value greater than 0.

3. The composite active material according to claim 1 or 2, wherein
   in the first solid electrolyte, M includes yttrium.

4. The composite active material according to any one of claims 1 to 3, wherein
   the first solid electrolyte includes at least one selected from the group consisting of $Li_3YBr_3Cl_3$ and $Li_3YBr_2Cl_4$.

5. The composite active material according to any one of claims 1 to 4, wherein
   BET specific surface area of the active material defined as $S_{AM}$ and BET specific surface area of the composite active material defined as $S_{AM-SE}$ satisfy a following Expression (2):

   $$S_{AM-SE}/S_{AM} < 1 \quad \text{Expression (2)}.$$

6. The composite active material according to claim 5, satisfying a following Expression (3):

   $$S_{AM-SE}/S_{AM} < 0.5 \quad \text{Expression (3)}.$$

7. The composite active material according to any one of claims 1 to 6, wherein
   the active material includes a lithium titanium oxide.

8. The composite active material according to claim 7, wherein
   the lithium titanium oxide includes $Li_4Ti_5O_{12}$.

9. The composite active material according to any one of claims 1 to 8, wherein
   the active material has an average particle diameter of greater than or equal to 5 $\mu$m.

10. The composite active material according to any one of claims 1 to 9, wherein
    the first solid electrolyte does not include sulfur.

**11.** An electrode material comprising:

the composite active material according to any one of claims 1 to 10; and
a second solid electrolyte.

**12.** A battery comprising:

a positive electrode; a negative electrode; and an electrolyte layer disposed between the positive electrode and the negative electrode, wherein
at least one selected from the group consisting of the positive electrode and the negative electrode includes the electrode material according to claim 11.

**13.** A method for manufacturing a composite active material, comprising:

impregnating an active material with a mixture liquid including at least one selected from the group consisting of a first solid electrolyte and a raw material thereof and a solvent; and
removing the solvent included in the mixture liquid from the active material, wherein
the active material is a porous material including Li, Ti, and O and having a plurality of pores,
the first solid electrolyte and the raw material include Li, M, and X,
M is at least one selected from the group consisting of metal elements and metalloid elements belonging to the 5th or 6th period, and
X is at least one selected from the group consisting of F, Cl, Br, and I.

**14.** The method for manufacturing a composite active material according to claim 13, further comprising heating the active material.

**15.** The method for manufacturing a composite active material according to claim 13 or 14, wherein
the solvent includes a nitrile solvent.

# FIG. 1

# FIG. 2

```
        ┌──────────────┐
        │    START     │
        └──────┬───────┘
               │
               ▼
┌─────────────────────────────────────────────┐
│ IMPREGNATE ACTIVE MATERIAL WITH MIXTURE LIQUID│ ～S1
│     CONTAINING AT LEAST ONE SELECTED FROM     │
│ THE GROUP CONSISTING OF FIRST SOLID ELECTROLYTES│
│   AND RAW MATERIAL THEREOF AND SOLVENT        │
└──────────────────┬──────────────────────────┘
                   │
                   ▼
┌─────────────────────────────────────────────┐
│          REMOVE SOLVENT CONTAINED IN          │ ～S2
│    MIXTURE LIQUID FROM ACTIVE MATERIAL        │
└──────────────────┬──────────────────────────┘
                   │
                   ▼
           ┌──────────────┐
           │     END      │
           └──────────────┘
```

# FIG. 3

FIG. 4

2000

FIG. 5

PRESSURE

PRESSURE

## INTERNATIONAL SEARCH REPORT

| International application No. |
|---|
| **PCT/JP2022/010446** |

**A.    CLASSIFICATION OF SUBJECT MATTER**

*H01M 4/485*(2010.01)i; *C01F 17/36*(2020.01)i; *C01G 23/00*(2006.01)i; *H01M 4/36*(2006.01)i; *H01M 4/62*(2006.01)i
FI:    H01M4/485; H01M4/36 A; H01M4/62 Z; C01G23/00 B; C01F17/36

According to International Patent Classification (IPC) or to both national classification and IPC

**B.    FIELDS SEARCHED**

Minimum documentation searched (classification system followed by classification symbols)

H01M4/485; C01F17/36; C01G23/00; H01M4/36; H01M4/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| Y | JP 2012-155994 A (TOYOTA MOTOR CORP.) 16 August 2012 (2012-08-16)<br>    claim 1, paragraphs [0009], [0015], [0016], [0019], [0020], fig. 1 | 1-15 |
| Y | WO 2019/135319 A1 (PANASONIC INTELLECTUAL PROPERTY MANAGEMENT CO., LTD.) 11 July 2019 (2019-07-11)<br>    claims 1, 5, 6, paragraphs [0015], [0047] | 1-15 |
| Y | WO 2019/146295 A1 (PANASONIC INTELLECTUAL PROPERTY MANAGEMENT CO., LTD.) 01 August 2019 (2019-08-01)<br>    claims 1-2, 6-7, paragraphs [0027], [0028] | 1-15 |
| Y | CN 112086619 A (ZHUHAI COSMX BATTERY CO., LTD.) 15 December 2020 (2020-12-15)<br>    paragraphs [0012], [0041]-[0095] | 1-15 |
| Y | JP 2017-152147 A (TOPPAN PRINTING CO., LTD.) 31 August 2017 (2017-08-31)<br>    paragraphs [0020], [0027] | 13-15 |
| A | JP 2017-135005 A (SEIKO EPSON CORP.) 03 August 2017 (2017-08-03)<br>    claim 1 | 1-15 |

☐ Further documents are listed in the continuation of Box C.          ☑ See patent family annex.

| \* Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/010446**

| Patent document cited in search report | | | Publication date (day/month/year) | Patent family member(s) | | | Publication date (day/month/year) |
|---|---|---|---|---|---|---|---|
| JP | 2012-155994 | A | 16 August 2012 | US | 2013/0295451 | A1 | |
| | | | | claim 1, paragraphs [0012], [0025], [0026], [0029], [0030], fig. 1 | | | |
| | | | | WO | 2012/101501 | A1 | |
| | | | | CN | 103339763 | A | |
| | | | | KR | 10-2013-0107352 | A | |
| WO | 2019/135319 | A1 | 11 July 2019 | US | 2020/0328459 | A1 | |
| | | | | claims 1, 5-6, paragraphs [0023], [0047] | | | |
| | | | | EP | 3736828 | A1 | |
| | | | | CN | 111406296 | A | |
| WO | 2019/146295 | A1 | 01 August 2019 | US | 2020/0350562 | A1 | |
| | | | | claims 1-2, 6-7, paragraphs [0044]-[0047] | | | |
| | | | | EP | 3745498 | A1 | |
| | | | | CN | 111566848 | A | |
| CN | 112086619 | A | 15 December 2020 | (Family: none) | | | |
| JP | 2017-152147 | A | 31 August 2017 | (Family: none) | | | |
| JP | 2017-135005 | A | 03 August 2017 | US | 2019/0036107 | A1 | |
| | | | | claim 1 | | | |
| | | | | WO | 2017/130818 | A1 | |
| | | | | CN | 108496266 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018504767 W